# EUROPÄISCHE PATENTANMELDUNG

(11) **EP 0 909 772 A1**
(43) Veröffentlichungstag der Anmeldung: **21.04.1999**
(21) Anmeldenummer: 98118862.6
(22) Anmeldetag: 06.10.1998
(51) Int. Cl.: C08G 18/78, C08G 18/48

(54) **Halbharte Polyurethanschaumstoffe auf Basis biuretmodifizierter Polyisocyanate, Verbundteile unter Verwendung dieser halbharten Polyurethanschaumstoffe sowie ein Verfahren zu deren Herstellung**

(30) Priorität: 15.10.1997 DE 19745462
(71) Anmelder: BAYER AG, 51368 Leverkusen (DE)
(72) Erfinder: Rasshofer, Werner Dr., 51061 Köln (DE); Grönen, Jürgen Dr., 51491 Overath (DE); Schmidt, Manfred Dr., 41540 Dormagen (DE); Woynar, Helmut Dr., 41540 Dormagen (DE)

(57) **Zusammenfassung**

Beschrieben werden halbharte Polyurethanschaumstoffe mit einer Dichte von 60,1 bis 200 kg/m³, erhältlich durch die Umsetzung
a) einer Polyisocyanatkomponente des NCO-Gehaltes 30-47%, enthaltend ein Toluylendiisocyanat mit Biuretstruktur mit einem NCO-Wert im Bereich von 33 bis 47 Gew.-%,
b) einer Polyetherpolyolkomponente mit einem mittleren Molekulargewicht von 1.000 bis 12.000, einer Funktionalität ≥2,
c) einem Gesamtwassergehalt, bez. auf 100 Tle b)-f), von 0,5-8 Gew.-Teilen
d) gegebenenfalls einer weiteren Polyolkomponente mit einem mittleren Molekulargewicht von 62 bis 1.000 und einer Funktionalität ≥2,
e) gegebenenfalls weiteren an sich bekannten Hilfs-, Zusatz- und Flammschutzmitteln,
f) gegebenenfalls Treibmitteln,
unter Einhaltung einer NCO-Kennzahl von 30 bis 180, bezogen auf die Summe der Komponenten b) bis f).

Ebenfalls beschrieben wird ein Verfahren zur Herstellung dieser Schaumstoffe und deren Einsatz in Verbundbauteilen.

## Beschreibung

Die Erfindung betrifft die Herstellung von halbharten Polyurethanschaumstoffen durch Umsetzung von Biuret-modifiziertem Polyisocyanat auf TDI-Basis mit Polyetherpolyolen unter Verwendung von Wasser als Treibmittel.

Die Herstellung von Polyurethanschaumstoffen ist hinlänglich bekannt (PUR-Handbuch, G. Oertel 1993, Bd. 7, S. 236 ff). Polyurethanschaumstoffe finden Verwendung z.B. in der Möbel- und Automobilbranche und werden z.B. zur Hinterschäumung von Flächengebilden zur Verwendung als Instrumententafeln oder Konsolen in Kraftfahrzeugen eingesetzt.

Seitens des Automobil-Marktes wird immer stärker die Forderung nach Gewichtseinsparung bei gleichbleibenden physikalischen Schaumeigenschaften erhoben. Um diese jetzt schon bestehende Anforderung nach Dichte- bzw. Gewichtssenkung zu erfüllen, muß in der Regel auf der Seite der Polyolkomponente z.B. der Wassergehalt deutlich angehoben und die Formulierung an die erhöhte Wassermenge angepaßt werden. Die bestehenden Systeme auf MDI-Basis, z.B. der halbharte Hinterfüllschaum Bayfill^{®} der Fa. Bayer AG, werden dadurch jedoch immer schwieriger zu verarbeiten, da die bestehenden Werkzeuge und Produktionsmöglichkeiten an die hohen Innendrücke und Gasausbeuten nicht angepaßt sind und die Verarbeitungsfenster der Schaumsysteme immer enger werden.

Mit zunehmendem Nachdruck wird auch die Erhöhung der Produktivität durch Reduzierung der Entformzeit von derzeit ca. 4 bis 5 Minuten auf <2,5 Minuten verlangt. Dabei sollen die anderen Eigenschaften, insbesondere die Dauergebrauchseigenschaften, nicht schlechter werden.

Aufgabe der vorliegenden Erfindung war es, halbharte Polyurethanformschaumstoffe mit hoher Schaumstoffhärte, geringer Dichte und möglichst kurzer Entformzeit zur Verfügung zu stellen.

Überraschenderweise wurde jetzt gefunden, daß die Verwendung von Biuret-modifiziertem TDI bei der Herstellung von halbharten Polyurethanformschaumstoffen zu Schaumstoffen mit einer bislang unerreichbar niedrigen Dichte bei dabei guter Härte und kurzer Entformzeit führt.

Gegenstand der Erfindung sind daher halbharte Polyurethanschaumstoffe mit einer Dichte von 60,1 bis 200 kg/m³` welche erhältlich sind durch die Umsetzung
a) einer Polyisocyanat-Komponente mit einem NCO-Gehalt von 20 bis 47 Gew.-%, enthaltend ein Toluylendiisocyanat mit Biuretstruktur mit einem NCO-Wert im Bereich von 33 bis 47 Gew.-%,
b) einer Polyetherpolyolkomponente mit einem mittleren Molekulargewicht von 1.000 bis 12.000, einer Funktionalität ≥ 2 und gegebenenfalls einem Feststoffgehalt ≤ 50 Gew.-Teilen,
c) einer Gesamtwassermenge, bezogen auf 100 Teile b) - f), von 0,5 bis 8 Gew.-Teilen,
d) gegebenenfalls einer weiteren Polyolkomponente mit einem mittleren Molekulargewicht von 62 bis 1.000 und einer Funktionalität ≥ 2,
e) gegebenenfalls weiteren an sich bekannten Hilfs-, Zusatz- und Flammschutzmitteln,
f) gegebenenfalls weiteren Trennmitteln
unter Einhaltung einer NCO-Kennzahl von 30 bis 180, vorzugsweise 60 bis 140, besonders bevorzugt 80 bis 120, bezogen auf das Verhältnis von a) zur Summe der Komponenten b) bis e) in offenen oder geschlossenen Formwerkzeugen.

Weiterer Gegenstand der Erfindung sind Verbundformteile aus
A) einer halbharten, inneren Polyurethanschaumschicht,
B) einer tragenden Außen- und/oder Innenschicht aus z.B. Kunststoff, Metall oder Holzwerkstoffen und
C) einer Außenschicht aus einer flexiblen Haut aus Kunststoff oder einem Naturprodukt, dadurch gekennzeichnet, daß als Polyurethanschicht A) halbharte Polyurethanschaumstoffe mit einer Formteildichte von 60,1 bis 200 kg/m³, welche erhältlich sind durch die Umsetzung
   a) einer Polyisocyanat-Komponente mit einem NCO-Wert von 20 bis 47 %, enthaltend ein Toluylendiisocyanat mit Biuretstruktur mit einem NCO-Wert im Bereich von 33 bis 47 %,
   b) einer Polyetherpolyolkomponente mit einem mittleren Molekulargewicht von 1.000 bis 12.000, einer Funktionalität ≥ 2 und gegebenenfalls einem Feststoffgehalt ≤ 50 Gew.-Teilen,
   c) einer Gesamtwassermenge, bezogen auf 100 Teile b) bis f), von 0,5 bis 8 Gew.-Teilen,
   d) gegebenenfalls einer weiteren Polyolkomponente mit einem mittleren Molekulargewicht von 62 bis 1.000 und einer Funktionalität ≥ 2,
   e) gegebenenfalls weiteren an sich bekannten Hilfs-, Zusatz- und Flammschutzmitteln,
   f) gegebenenfalls weiteren Treibmitteln
unter Einhaltung einer NCO-Kennzahl von 30 bis 180, vorzugsweise 60 bis 140, besonders bevorzugt 80 bis 120, bezogen auf das Verhältnis von Komponente a) zur Summe der Komponenten b) bis e), in geschlossenen Formwerkzeugen.

Bevorzugt sind solche erfindungsgemäßen Polyurethanschaumstoffe, bei denen bei der Herstellung der NCO-Wert des TDI mit Biuretstruktur der Polyisocyanatkomponente a) entweder im Bereich von 33 bis 40 Gew.-% oder im Bereich von 40 bis 47 Gew.-% liegt und bei denen als Katalysatoren (Komponente e) sogenannte polymere Katalysatoren, wie sie in DE-A 42 18 840 beschrieben werden, eingesetzt werden.

Bei der Herstellung der erfindungsgemäßen halbharten Schaumstoffe kann bevorzugt eine Isocyanatkomponente a), die nach erfolgter TDI-Biuretisierung mit TDI, MDI und/oder polymerem MDI abgemischt wurde, eingesetzt werden.

Besonders bevorzugt setzt sich die Isocyanatkomponente z.B. folgendermaßen zusammen:
- TDI 80 (2,4 und 2,6 TDI; 80/20 GT) / TDI-Biuret / polymeres MDI (NCO: 42 %)
- TDI-Biuret / polymeres MDI (NCO: 35 %)
- TDI 80 / TDI-Biuret (NCO: 42 %)
- TDI 80 / TDI-Biuret (NCO: 40 %)
- TDI 100 / TDI-Biuret (NCO: 42 %)
- TDI 80 / TDI-Biuret (NCO: 37 %)

Die Herstellung von TDI mit Biuretstruktur ist schon länger bekannt und auf unterschiedliche Weise möglich, wie es in zahlreichen Patentschriften dokumentiert ist. Großtechnisch sind 3 Verfahrensweisen von Bedeutung:
1. Umsetzung von TDI mit t-Butanol (DD-A-214 847)
2. Umsetzung von TDI mit Wasser (DE-A-21 17 575)
3. Umsetzung von TDI mit Amin (DE-A-22 61 065, DE-A-11 74 749, DE-A-31 14 638)

All diesen 3 Verfähren gemeinsam ist die diskontinuierliche Umsetzung zum Biuret. Dabei werden bei Verfahren 1 und 2 gasförmige Reaktionsprodukte (i-Buten, CO₂) erzeugt, die entsorgt bzw. abgeführt werden müssen. Zudem werden aus Amin hergestellte NCO-Gruppen wieder zurückgeführt in das Amin, was ökonomisch wenig sinnvoll ist. Daher ist das Amin-Verfahren 3 zu bevorzugen. Bei der Amin-Variante ist es notwendig, das Amin für eine gleichbleibend gute Umsetzung über die gesamte Reaktionsdauer in einem Lösungsmittel aufzunehmen, welches anschließend wieder abdestilliert wird.

Bevorzugt wird das TDI mit Biuretstruktur nach einem kontinuierlichen Prozeß durch Umsetzung der reinen Edukte (TDI + Amin), wie in der EP-A-0 277 353 beschrieben, hergestellt, ohne die Notwendigkeit einer weiteren Aufarbeitung oder nachfolgenden Entsorgung von Nebenprodukten haben zu müssen.

Besonders bevorzugt wird das TDI mit Biuretstruktur in einem einstufigen kontinuierlichen Verfahren hergestellt, wie in der DE-A 1 97 07 577 beschrieben, indem man TDI
a) mit organischen Diaminen mit aromatisch gebundenen Aminogruppen in einem Molverhältnis von mindestens 8:1 in einer Mischkammer kontinuierlich zusammenführt und
b) bei einer Temperatur von oberhalb 180°C zur Reaktion bringt,
c) wobei die Verweilzeit der Reaktionspartner bzw. des Reaktionsgemisches in der Mischkammer ab Vereinigung der Ausgangskomponenten maximal 60 Sekunden beträgt.

Bevorzugt setzt man für dieses Verfahren ein Gemisch aus 80 Gew.% 2,4-Toluylendiisocyanat und 20 Gew.% 2,6-Toluylendiisocyanat (TDI 80) oder das Gemisch TDI 65 oder TDI 100 ein.

Weitere Ausgangsmaterialien sind organische Diamine mit aromatisch gebundenen Aminogruppen eines unter 300 liegenden Molekulargewichts. Bevorzugt sind 2,4-/2,6-Tolylendiamin bzw. Diphenylmethandiamine.

Bei der Biuretisierung werden das TDI und die Diamine kontinuierlich in solchen Mengenverhältnissen zur Umsetzung gebracht, die einem Äquivalenzverhältnis von Isocyanatgruppen zu Aminogruppen von mindestens 8:1, bevorzugt von 10:1 bis 20:1 entsprechen, wobei die Aminogruppen als monofunktionelle Gruppen in die Berechnung eingehen. Wesentlich ist, daß die Ausgangsmaterialien sofort nach ihrer Durchmischung bei einer Temperatur von oberhalb 180°C, vorzugsweise von oberhalb 200°C, miteinander zur Reaktion gebracht werden. Die Aulheizung des TDI muß wegen der bekannten Temperaturempfindlichkeit dieser Verbindungen innerhalb eines möglichst kurzen Zeitraums erfolgen, vorzugsweise innerhalb eines Zeitraums von weniger als 30 Sekunden.

Die kontinuierlichen Ströme der Reaktionspartner werden nach der beschriebenen Vorerwärmung in einer Mischkammer für eine Verweilzeit von maximal 60 Sekunden vereinigt.

Nach Durchlaufen der Mischkammer und der gegebenenfalls der Mischkammer nachgeschalteten Verweilzeitstrecke wird das Reaktionsgemisch kontinuierlich durch geeignete Wärmeaustauscher innerhalb von höchstens 10 Minuten, stetig oder stufenweise auf eine Temperatur innerhalb des Temperaturbereichs von 120 bis 200°C, abgekühlt. Anschließend wird mit Hilfe eines hochwirksamen Kühlers möglichst schnell auf eine Temperatur von <50°C abgekühlt, um die sonst als Nebenreaktion auftretende Dimerisietung, die zu unerwünschten Feststoffbildungen führen, zu unterdrücken.

Ein weiterer Gegenstand der Erfindung ist ein Verfahren zur Herstellung halbharter Polyurethan-Schaumstoffe mit einer Formteildichte von 60,1-200 kg/m³, bei dem man
a) eine Polyisocyanatkomponente mit einem NCO-Wert von 30-47%, enthaltend ein Toluylendiisocyanat mit Biuretstruktur mit einem NCO-Wert im Bereich von 33 bis 47 Gew.-%, mit
b) einer Polyetherpolyolkomponente mit einem mittleren Molekulargewicht von 1.000 bis 12.000, einer mittleren Funktionalität ≥2 und gegebenenfalls einem Feststoffgehalt ≤ 50 Gew.-Teilen,
c) einer Gesamtwassermenge, bez. auf 100 Tle b)-f), von 0,5-8 Gew.-Teilen
d) gegebenenfalls einer weiteren Polyolkomponente mit einem mittleren Molekulargewicht von 62 bis 1.000 und einer Funktionalität ≥2,
e) gegebenenfalls in Gegenwart von weiteren an sich bekannten Hilfs-, Zusatz- und Flammschutzmitteln,
f) gegebenenfalls in Gegenwart von weiteren Treibmitteln
unter Einhaltung einer NCO-Kennzahl von 30 bis 180, vorzugsweise 60 bis 140, besonders bevorzugt 80 bis 120, bezogen auf das Verhältnis von a) zur Summe der Komponenten b) bis d), in geschlossenen Werkzeugen umsetzt.

Gegenüber Schalttafel-etc-Systemen, die MDI-Polyisocyanate des Stands der Technik verwenden, haben die erfindungsgemäßen Systeme mit den Biuret-TDI-Isocyanaten folgende Vorteile:
- erstmalige Verwendung von TDI für Schalttafeln etc.,
- weitere hohe Dichte- und Gewichtsreduktion ist möglich,
- höhere Wassergehalte sind jetzt möglich,
- die halbharten Schäume sind bzgl. ihres Härtegrades über die Kennzahl in einem sehr weiten Rahmen variierbar,
- sie weisen wegen ihrer sehr hohen Offenzelligkeit sehr geringe Gasempfindlichkeit auf, dadurch sind stark unterschiedliche Gewichte ohne Gasprobleme möglich.

Das TDI mit Biuretstruktur wird als Ausgangsmaterial für die erfindungsgemäßen halbharten Schaumstoffe vorteilhaft eingesetzt. Die erfindungsgemäßen Schaumstoffe können als Block-, in der Regel aber als Formschaumstoffe erhalten werden. Die Formschaumherstellung kann dabei als sogenanntes One-Shot-Verfahren durchgeführt werden. Es wird dabei das vorstehend beschriebene TDI mit Biuret-Struktur, gegebenenfalls in Abmischung mit weiterem MDI oder TDI, insbesondere mit TDI 80, MDI 80/20, TDI 65 oder TDI 100, eingesetzt.

Als Polyetherpolyolkomponente b) werden Polyetherpolyole bzw. deren Gemische eingesetzt, die in an sich bekannter Weise durch Alkoxylierung von geeigneten Startermolekülen oder -gemischen hergestellt werden, wobei zur Alkoxylierung insbesondere Propylenoxid und gegebenenfalls zusätzlich Ethylenoxid verwendet werden. Sie haben ein mittleres Molekulargewicht von 1.000 bis 12.000 und eine mittlere Funktionalität von ≥ 2. Geeignete Startermoleküle sind z.B. Wasser, Ethylenglykol, Propylenglykol, Trimethylolpropan, Glycerin, Pentaerythrit, Sorbit oder Rohrzucker. Bevorzugt sind solche Polyetherpolyole, die einen primären OH-Gruppengehalt von mehr als 50 % besonders bevorzugt größer 70 % aufweisen. Derartige Polyetherpolyole entstehen durch endständiges Aufpfropfen von Ethylenoxid.

Besonders bevorzugt werden hochreaktive Polyole eingesetzt. Dabei handelt es sich um trifunktionelle Polyole, die neben einem hohen Molekulargewicht von üblicherweise zwischen etwa 4.800 und 6.000 g/mol mindestens 70 % primäre Hydroxylgruppen aufweisen, so daß deren OH-Zahl zwischen 35 und 28 liegt. Dieses Polyole sind bis zu 87 % aus Propylenoxid aufgebaut, enthalten aber ausschließlich Ethylenoxid-Endgruppen. Gegebenenfalls können auch Polyesterpolyole in der Komponente b) mitverwendet werden.

Die Polyetherpolyolkomponente b) kann als Feststoff das an sich bekannte Styrolacrylnitril (SAN) bis zu einem Feststoffgehalt von 50 Gew.-Teilen zugesetzt sein. Bei der Herstellung der erfindungsgemäßen Schaumstoffe kann aber auch völlig auf die Mitverwendung von Feststoffen in der Polyetherpolyolkomponente b) sowie auch auf den Zusatz der Vernetzerkomponente c) völlig verzichtet werden.

Falls eine Vernetzerkomponente d) zugesetzt wird, sind als derartige Vernetzer z.B. Diethanolamin, Triethanoalamin, Glycerin, Trimethylolpropan (TMP), Addukte von solchen Vernetzerverbindungen mit Ethylen- und/oder Propylenoxid mit einer OH-Zahl von < 1.000 oder auch Glykole mit einem Molekulargewicht ≤ 1.000 brauchbar.

Besonders bevorzugt sind Triethanolamin, Glycerin, TMP oder niedrige EO- und/oder PO-Addukte hiervon.

Weiterhin können gegebenenfalls als weitere Komponente e) noch an sich bekannte Hilfs-, Zusatz- und/oder Flammschutzmittel zugesetzt sein. Unter Hilfsstoffen werden dabei insbesondere an sich bekannte Katalysatoren und Stabilisatoren verstanden.

Als Flammschutzmittel ist z.B. Melamin möglich.

Gegebenenfalls als Hilfs- und Zusatzmittel einzusetzen sind z.B. Katalysatoren der an sich bekannten Art, z.B. tertiäre Amine, wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-A-2 624 527 und 2 624 528), 1,4-Diaza-bicyclo-(2,2,2)-octan, N-Methyl-N'-dimethylaminoethyl-piperazin, Bis-(dimethylaminoalkyl)-piperazine (DE-A-2 636 787), N,N-Dimethylbenzyl-amin, N,N-Dimethylcyclohexylamin, N,N-Diethylbenzyl-amin, Bis-(N,N-diethylaminoethyl)-adipat, N,N,N',N'-Tetramethyl-1,3-butandiamin, N,N-Dimethyl-β-phenyl-ethyl-amin, 1,2-Dimethylimidazol, 2-Methylimidazol, monocyclische und bicyclische Amidine (DE-A-1 720 633), Bis-(dialkylamino)-alkyl-ether (US 3 330 782, DE-A-1 030 558, DE-A-1 804 361 und 2 618 280) sowie Amidgruppen (vorzugsweise Formamidgruppen) aufweisende tertiäre Amine gemäß der DE-A-2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A-2 732 292.

Als Katalysatoren kommen ferner Silaamine mit Kohlenstoff-Silizium-Bindungen, wie sie z.B. in der DE-A-1 229 290 beschrieben sind, in Frage, z.B. 2,2,4-Trimethyl-2-silamorpholin und 1,3-Diethyl-aminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-A-1 769 043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-A-2 062 286, 2 062 289, 2 117 576, 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinnmercaptid (DE-A-1 769 367; US-3 645 927) vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinn-diacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Amino-pyridinen oder Hydrazinopyridinen (DE-A-2 434 185, 2 601 082 und 2 603 834).

Bevorzugt werden als gegebenenfalls einzusetzende Katalysatoren (Komponente e) sogenannte polymere Katalysatoren, wie sie in der DE-A-4 218 840 beschrieben werden eingesetzt. Bei diesen Katalysatoren handelt es sich um in der Alkalisalz-Form vorliegende Umsetzungsprodukte von (i) tri- oder höherfunktionellen Alkoholen des Molekulargewichtsbereichs 92 bis 1000 mit (ii) intramolaren Carbonsäureanhydriden. Die Umsetzungsprodukte weisen (im statistischen Mittel) mindestens 2, vorzugsweise 2 bis 5, Hydroxylgruppen und mindestens 0,5, vorzugsweise 1,0 bis 4, Carboxylatgruppen auf, wobei die Gegenionen zu den Carboxylatgruppen Alkalikationen darstellen. Bei den 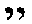 Umsetzungsprodukten" der Ausgangskomponente (i) und (ii) kann es sich wie aus dem Gehalt an Carboxylatgruppen ersichtlich, auch um Gemische aus echten Umsetzungsprodukten mit überschüssigen Mengen an Alkoholen (i) handeln.

Geeignete mehrwertige Alkohole zur Herstellung der Umsetzungsprodukte sind beispielsweise Glycerin, Trimethylolpropan, Sorbit, Pentaerythrit, Gemische derartiger mehrwertiger Alkohole, Alkoxylierungsprodukte des oben genannten Molekulargewichtsbereichs derartiger mehrwertiger Alkohole oder von Gemischen derartiger Alkohole, wobei bei der Alkoxylierung Propylenoxid und/oder Ethylenoxid in beliebiger Reihenfolge oder im Gemisch, vorzugsweise jedoch ausschließlich Propylenoxid zum Einsatz gelangen.

Geeignete intramolekulare Carbonsäureanhydride zur Herstellung der Umsetzungsprodukte sind beispielsweise Maleinsäureanhydrid, Phthalsäureanhydrid, Hexahydrophthalsäureanhydrid, Bernsteinsäureanhydrid, Pyromellitsäureanhydrid oder beliebige Gemische derartiger Anhydride. Maleinsäureanhydrid wird besonders bevorzugt eingesetzt.

Weitere Vertreter von zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei, gegenüber Isocyanaten reaktionsfähigen Wasserstoffatomen, eingesetzt.

Weitere gegebenenfalls eingesetzte Zusatzstoffe sind oberflächenaktive Zusatzstoffe, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diethylamin oder stearinsaures Diethanolamin infrage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-2 834 748, 2 917 480 und 3 629 308 beschrieben. Von besonderem Interesse sind vielfach über Allophanatgruppen verzweigte Polysiloxan-Polyoxyalkylen-Copolymere gemäß DE-A-2 558 523.

Weitere mögliche Zusatzstoffe sind Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Als gegebenenfalls einzusetzende Treibmittelkomponente f) sind alle bei der PU-Schaumstoffherstellung bekannten Treibmittel möglich. Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel z.B. Luft, CO₂ oder N₂O, in Frage, Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Besonders bevorzugt werden als Treibmittel wasserstoffhaltige Fluoralkane (HFCKWs) sowie niedere Alkane wie z.B. Butan, Pentan, Isopentan, Cyclopentan, Hexan, Iso-Hexan, gegebenenfalls in Abmischung untereinander und/oder unter Zusatz von Wasser verwendet. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B.auf den Seiten 108 und 109, 453 bis 455 und 507 bis 510 beschrieben.

Bevorzugt ist jedoch Wasser bzw. CO₂ das alleinige Treibmittel

In überraschender Weise ist es bei den erfindungsgemäßen Polyurethanschaumstoffen möglich, eine gute Verarbeitungsbandbreite (z.B. Kennzahl- oder Temperaturvariation) und gute physikalische Eigenschaften (z.B. Stauchhärte, Zugfestigkeit) bei deutlich über dem Stand der Technik angehobenem Wassergehalt in der Polyolformulierung bei der Herstellung zu erreichen. Es können somit Polyurethanformteile mit deutlich geringer Dichte bzw Härte hergestellt werden, als es bisher mit den Isocyanaten nach dem Stand der Technik möglich war. Die erfindungsgemäßen Polyurethanschaumstoffe zeigen weiterhin eine deutliche Härtesteigerung nur durch Änderung des Mischungsverhältnisses der Isocyanat- und Polyolkomponente bei identischem Feststoffgehalt mit vergleichbaren Schaumstoffen des Standes der Technik. Gegebenenfalls kann auf den Einsatz von Feststoff gänzlich verzichtet werden.

Bei den erfindungsgemäßen Polyurethanschaumstoffen kann erfindungsgemäß durch den Einsatz von TDI mit Biuretstruktur bei der Schaumstoffproduktion eine deutliche Verkürzung der Klebfreizeit bei ansonsten für Standard-Mischungen üblichem Katalysatorgehalt und damit eine rasche Entformzeit nach Beendigung des Schäumprozesses erreicht werden. Überraschenderweise kommt es dabei nicht zu einer deutlichen Verkürzung der Reaktionszeiten, wie es sonst üblicherweise durch die Erhöhung der Katalysatormenge zur Erzielung kürzerer Entformzeiten beobachtet wird.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen", Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen, Als Formmaterial kommt Metall, z.B. Aluminium, oder Kunststoff, z.B. Epoxidharz, infrage. In der Form schäumt das schäumfahige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfahiges Reaktionsgemisch einträgt, daß der gebildete Schaumstoff die Form gerade ausfüllt. Man kann aber auch so arbeiten, daß man mehr schäumfahiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus der US-3 178 490 und 3 182 104 bekannt.

Bei der Formverschäumung werden vielfach an sich bekannte "äußere Trennmittel", wie Siliconöle, Wachse oder Seifen, mitverwendet. Man kann aber auch sogenannte "innere Trennmittel", gegebenenfalls im Gemisch mit äußeren Trennmitteln, verwenden, wie sie z.B. aus den DE-A-2 121 670 und 2 307 589 bekanntgeworden sind.

Erfindungsgemäß lassen sich auch kalthärtende Schaumstoffe herstellen (vgl. GB-B-1 162 517, DE-A-2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z.B. folgende Anwendung: in Armaturentafeln, Armlehnen, Handgriffen, Konssolenverkleidungen, Handschuhkastendeckel, Türinnenverkleidungen bzw. in ähnlich aufgebauten Bauteilen in anderen Industriebereichen

Zusammengesetzte Artikel wie Armaturentafeln enthalten außer A) dem erfindungemäßen halbharten Polyurethanschaum noch B) eine tragenden Außen- und/oder Innenschicht aus z.B. Kunststoffen wie einem PC/ABS-Blend, ABS, ABS-GF, SMA, PP-GMT, Metall wie Eisenblech oder Aluminium oder Holzwerkstoffen wie mit PP oder Phenolharzen gebundener Cellulosefasern und C) einer Außenschicht aus einer flexiblen Haut aus Kunststoff wie z.B. einer PVC- oder TPO- oder TPU-Slushhaut, einer tiefgezogenen PVC/ABS-Haut oder einem Naturprodukt wie Leder.

Die folgenden Beispiele sollen die Erfindung weiter erläutern, ohne sie jedoch in ihrem Umfang zu beschränken.

### Beispiele

### Freischaumherstellung (Labor)

Die auf 25°C konditionierten Komponenten werden mittels Rührer (SPW- oder Pendraulik--Rührwerk) durch folgende Vorgehensweise zur Reaktion gebracht: Die Isocyanat-Komponente wird in das Reaktionsgefäß, das die Polyolformulierung enthält, gegeben. Anschließend werden die Komponenten in ihrem Reaktionsgefäß mittels Rührer vermischt. Die Drehzahl beträgt 1.400 U/min, diew Rührzeit 10sec.

### Bestimmung der Startzeit:

Die Startzeit ist der Zeitraum vom Beginn der Vermischung (Eintauchen des Rührtellers) bis zum deutlich erkennbaren Reaktionsbeginn. Der Reaktionsbeginn stellt sich durch Volumenzunahme des reagierenden Gemisches dar.

### Bestimmung der Steigzeit:

Unter Steigzeit wird die Zeitspanne zwischen Vermischungsbeginn und maximaler vertikaler Schaumausdehnung verstanden. Bei MDI-Systemen, die aufgrund ihrer Offenzelligkeit wieder absacken, gilt der Übergangspunkt von der Steigphase in die Sackphase als Ende der Steigzeit, bei solchen, die nicht absacken, das Ende der Schaumausdehnung..

### Formteilherstellung:

Die Verarbeitung der Rohstoffe erfolgt nach dem Reaktionsspritzgußverfahren (RSG-Verfahren). Es handelt sich dabei um eine Fülltechnik, bei der die hochaktiven, flüssigen Ausgangskomponenten über Dosier- und Mischaggregate in kurzer Zeit in die Form eingetragen werden.

Die Rohstoffkomponenten werden auf 25 bis 30°C temperiert. Vor der eigentlichen Formteilherstellung wird zunächst die vorgegebene Schalttafel-Form auf die für den Schäumprozeß erforderliche Temperatur von ca. 40°C gebracht. Danach werden anhaftende Schaumreste von Vorversuchen entfernt, die Entlüftungs-schlitze bzw. die Entlüftungsbohrungen gereinigt und schließlich die Formeninnenwand mit einem geeigneten Trennmittel beaufschlagt. Nachdem Druck, Temperatur, Mischungsverhältnis (= Kennzahl) und Förderzeit der Rohstoffkomponenten bzw. der Maschine eingestellt wurden, erfolgt die Formteilfertigung durch maschinelle Rohstoffvermischung und zeilenförmigen Austrag des schäumfahigen Gemisches in die Form. Nach Beendigung des Eintrags wird die Form geschlossen. Nach Ablauf der Rohstoffsystem-spezifischen Formenstandzeit wird die Form geöffnet und das Teil entnommen.

### Eingesetzte Rohstoffe:

| | |
|---|---|
| Polyether 1 : | TMP + PO/EO, OHZ. 28 mg KOH/g, MG 6000 |
| Polyether 2 : | TMP + PO/EO, OHZ: 35 mg KOH/g, MG 4800 |
| Polyether 3 : | 20 % SAN-Copolymerisat im Polyether, OHZ: 28 mg KOH/g |
| Vernetzer 1: | Glycerin mit OH-Zahl 1825 mgKOH/g |
| Vernetzer 2: | Diethanolamin mit OH-Zahl 1600 mgKOH/g |
| Zellöffner 1: (Additive) | Glycerin/PO/EO mit einer OH-Zahl von 36 mgKOH/g |
| Vernetzer 4: | Triethanolamin/PO mit einer OH-Zahl von 1825 mgKOH/g |
| Katalysator 1: | 2,2'-Bis(dimethylaminoethyl)ether 70%-ig in Dipropylenglykol |
| Katalysator 2: | Triethylendiamin 33%-ig in Dipropylendiglykol |
| Katalysator 3: | Desmorapid VP.PU 59IF05 der Bayer AG (DE-OS 42 18 840) |
| Katalysator 4: | Desmorapid VP.PU 59IF06 der Bayer AG (DE-A-42 18 840) |
| Haftvermittler 1: (Additiv) | Adipinsäure/Hexandiol-1,6-Polyester als 50%ige Lösung in Benzylbutylphthalat. |
| Dispergiermittel 1: (Additiv) | Gemisch von C12-C18-Fettalkoholen, das mit einem 1:1 -EO/PO-Gemisch zu einer OH-Zahl von 52 alkoxyliert worden ist. |

Es wurden folgenden TDI-Komponenten mit Biuretstruktur für die Herstellung der erfindungsgemäßen Schaumstoffe eingesetzt:
- Isocyanat 1:: TDI 80 / TDI -Biuret (NCO: 37 %)

Die Herstellung des TDI mit Biuretstruktur erfolgte auf an sich bekannte Weise, wie in der Beschreibung erläutert und wurde entsprechend mit TDI 80, TDI 100 bzw. polymeren MDI auf den angegebenen NCO-Wert abgemischt.

Die erfindungsgemäß hergestellten halbharten Schaumstoffe wurden mit halbhartem Schaumstoff nach dem Stand der Technik verglichen. Hierfür wurde die folgenden Isocyanatkomponente des Standes der Technik eingesetzt.
- Isocyanat A:: Demodur MDI 44V20 der Bayer AG mit einem ca. NCO-Gehalt 31.5

Die nachfolgenden Beispiele (Beispiel 1: Vergleichsbeispiel) sind in Tabellenform angegeben. Die dabei angegebenen Reaktionszeiten, Klebfreizeiten und Entformzeiten sind dabei folgendermaßen definiert.
- Reaktionszeiten =: Start-/Fadenzieh-/Steigzeit bei Kennzahl 100.
- Klebfreizeit =: Zeit, in der bei Kennzahl 100 die Oberfläche eines Freischaums nicht mehr zum Kleben neigt.
- Entformzeit =: Zeit, nach der das Formteil aus dem Werkzeug entnommen wird.
- MV 100:: Mischungsverhältnis bei einem Index von 100:
100 Gew.-Teile Polyolformulierung zu x Gewichtsteilen Isocyanat.

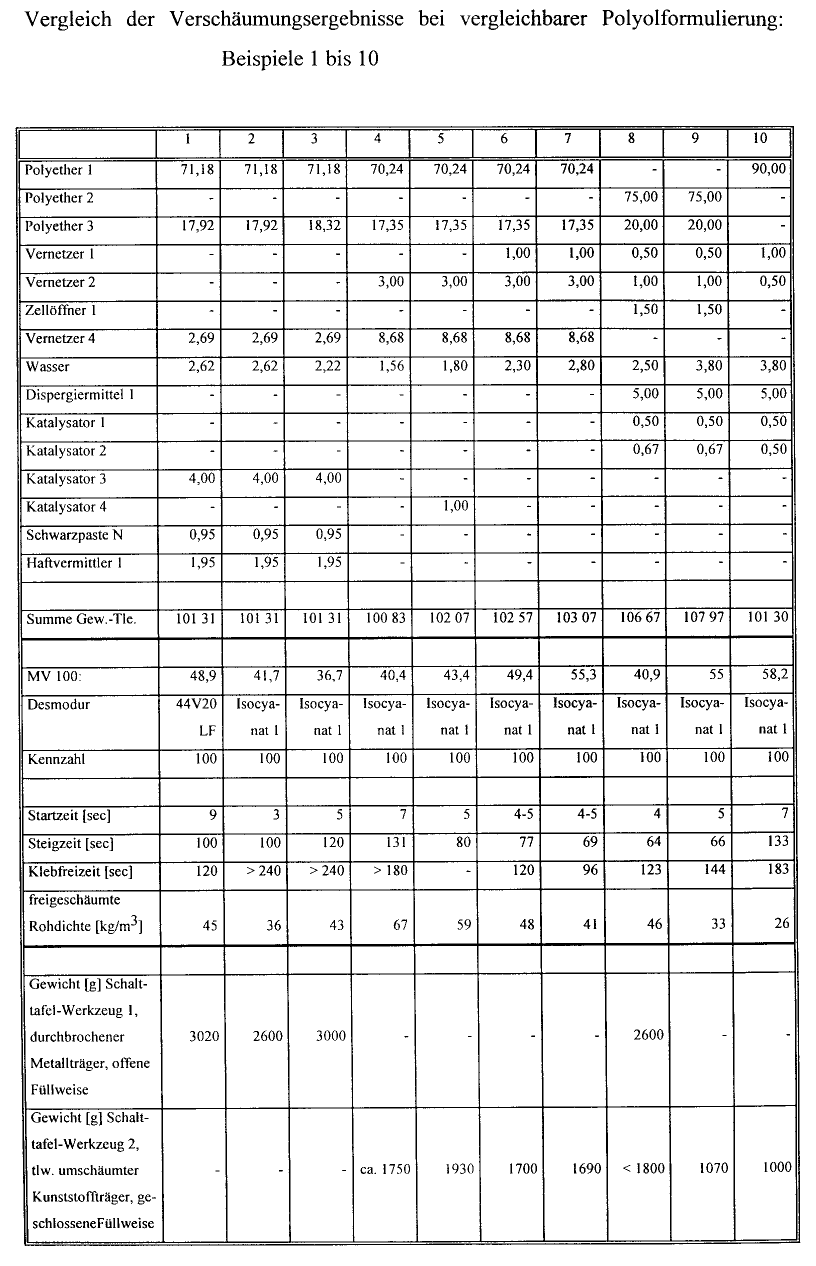

## Patentansprüche

1. Halbharte Polyurethan-Schaumstoffe mit einer Dichte von 60.1 bis 200 kg/m³, erhältlich durch die Umsetzung
a) einer Polyisocyanat-Komponente mit einem NCO-Gehalt von 30-47%, enthaltend ein Toluylendiisocyanat mit Biuretstruktur mit einem NCO-Wert im Bereich von 33 bis 47 Gew.-%,
b) einer Polyetherpolyolkomponente mit einem mittleren Molekulargewicht von 1.000 bis 12.000, einer Funktionalität ≥ 2 und gegebenenfalls einem Feststoffgehalt ≤ 50 Gew.-Teilen,
c) einem Gesamtwassergehalt, bezogen auf 100 Gew.-Teile b) bis f), von 0,5 bis 8 Gew.-Teilen
d) gegebenenfalls einer weiteren Polyolkomponente mit einem mittleren Molekulargewicht von 62 bis 1.000 und einer Funktionalität ≥ 2,
e) gegebenenfalls weiteren an sich bekannten Hilfs-, Zusatz- und Flammschutzmitteln,
f) gegebenenfalls weiteren Treibmitteln
unter Einhaltung einer NCO-Kennzahl von 30 bis 180, bezogen auf das Verhältnis von a) zur Summe der Komponenten b) bis e), in offenen oder geschlossenen Formwerkzeugen.

2. Halbharte Polyurethan-Schaumstoffe gemäß Anspruch 1, dadurch gekennzeichnet, daß der NCO-Wert des TDI mit Biuretstruktur der Polyisocyanatkomponente a) entweder im Bereich von 33 bis 40 Gew.-% oder im Bereich von 40 bis 47 Gew.-% liegt.

3. Halbharte Polyurethanschaumstoffe gemäß Anspruch 1 und 2, dadurch gekennzeichnet, daß als Komponente e) in der Alkalisalz-Form vorliegende Umsetzungsprodukte aus mindestens dreiwertigen Alkoholen und intramolekularen Carbonsäureanhydriden eingesetzt werden.

4. Halbharte Polyurethanschaumstoffe gemäß Ansprüchen 1 bis 3, dadurch gekennzeichnet, daß eine Isocyanatkomponente a), die nach erfolgter Biuretisierung mit TDI, MDI, polymerem MDI abgemischt wurde, eingesetzt wird.

5. Halbharte Polyurethanschaumstoffe gemäß Ansprüchen 1 bis 4, dadurch gekennzeichnet, daß als Isocyanatkomponente a) eine der folgenden Mischungen eingesetzt wird:
a1) TDI 80 (2,4 und 2,6 TDI; 80/20 GT) / TDI-Biuret / polymeres MDI (NCO: 42 %)
a2) TDI 80 / TDI-Biuret (NCO: 42 %)
a3) TDI 80 / TDI-Biuret (NCO: 40 %)
a4) TDI 100 / TDI-Biuret (NCO: 42 %)
a5) TDI 80 / TDI-Biuret (NCO: 37 %)

6. Halbharte Polyurethan-Schaumstoffe gemäß Ansprüchen 1 bis 5, dadurch gekennzeichnet, daß die Polyisocyanatkomponente a) eine Abmischung aus Toluylendiisocyanat, Diphenylmethandiisocyanat und/oder polymerem Diphenylmethandiisocyanat enthält.

7. Verfahren zur Herstellung halbharter Polyurethan-Schaumstoffe mit einer Formdichte von 60,1-200 kg/m³, bei dem man
a) eine Polyisocyanat-Komponente des NCO-gehaltes 30-47%, enthaltend ein Toluylendiisocyanat mit Biuretstruktur mit einem NCO-Wert im Bereich von 33 bis 47 Gew.-%, mit
b) einer Polyetherpolyolkomponente mit einem mittleren Molekulargewicht von 1.000 bis 12.000, einer Funktionalität ≥2 und gegebenenfalls einem Feststoffgehalt ≤ 50 Gew.-Teilen,
c) einer Gesamtwassermenge, bez. auf 100 Tle b)-f) von 0,5-8 Gew.-Teilen
d) gegebenenfalls einer weiteren Polyolkomponente mit einem mittleren Molekulargewicht von 62 bis 1.000 und einer Funktionalität ≥2, e) gegebenenfalls weiteren an sich bekannten Hilfs-, Zusatz- und Flamm
schutzmitteln,
f) gegebenenfalls weiteren Treibmitteln
unter Einhaltung einer NCO-Kennzahl von 30 bis 180, vorzugsweise 60 bis 140, besonders bevorzugt 80 bis 120, bezogen auf das Verhältnis von a) zur Summe der Komponenten b) bis e) in geschlossenen oder offenen Formwerkzeugen umsetzt.

8. Verbundformteil aus
A) einer mittleren oder äußeren Polyurethanschicht,
B) einer tragenden mittleren oder äußeren Schicht aus z.B. Kunststoff, Metall oder Holzwerkstoffen und
C) einer Außenschicht aus einer flexiblen Haut aus Kunststoff oder einem Naturprodukt, dadurch gekennzeichnet, daß als Polyurethanschicht A) halbharte Polyurethan-Schaumstoffe mit einer Dichte von 60.1 bis 200 kg/m³, welche erhältlich sind durch die Umsetzung
a) einer Polyisocyanat-Komponente mit einem NCO-Gehalt von 40-47%, enthaltend ein Toluylendiisocyanat mit Biuretstruktur mit einem NCO-Wert im Bereich von 33 bis 47 Gew.-%,
b) einer Polyetherpolyolkomponente mit einem mittleren Molekulargewicht von 1.000 bis 12.000, einer Funktionalität ≥2 und gegebenenfalls einem Feststoffgehalt ≤ 50 Gew.-Teilen,
c) einem Gesamtwassergehalt, bezogen auf 100 Teile b) bis f) von 0,5 bis 8 Gew.-Teilen
d) gegebenenfalls einer weiteren Polyolkomponente mit einem mittleren Molekulargewicht von 62 bis 1.000 und einer Funktionalität ≥2,
e) gegebenenfalls weiteren an sich bekannten Hilfs-, Zusatz- und Flammschutzmitteln,
f) gegebenenfalls weiteren Treibmitteln
unter Einhaltung einer NCO-Kennzahl von 30 bis 180, vorzugsweise 60 bis 140, besonders bevorzugt 80 bis 120, bezogen auf das Verhältnis von a: zur Summe der Komponenten b) bis e) in geschlossenen oder offenen Formwerkzeugen, eingesetzt werden.
